# EUROPEAN PATENT APPLICATION

(11) **EP 4 749 552 A1**
(43) Date of publication of application: **27.05.2026**
(21) Application number: 25215441.4
(22) Date of filing: 13.11.2025
(51) Int. Cl.: G06Q 20/18, G06V 20/40, G06V 40/00, G07F 19/00, G09B 21/00, G10L 13/027, G10L 15/00, G10L 21/10

(54) **COMMUNICATION WITH A BANK TELLER**

(30) Priority: 22.11.2024 US 202418956694
(71) Applicant: NCR Atleos Corporation, Atlanta Georgia 30308-1007 (US)
(72) Inventor: McKAIG, Michael, Dundee, DD5 3FR (GB); JAMIESON, Daniel, Angus, DD11 5LF (GB); GROSSI, Daniel, Dundee, DD2 5GT (GB)
(74) Representative: Secerna LLP

(57) **Abstract**

A method and a computing system are disclosed. The method comprises capturing, by at least one imaging device of an ATM, a video feed of a hearing-impaired user of the ATM performing at least one signed expression of a signed language, the at least one signed expression representing a message to a remote bank teller; transmitting, by the ATM, video data associated with the video feed to a translation module that is configured to identify the at least one signed expression represented in the video data and, based on the at least one signed expression, generate text and/or audio data for producing text and/or audio corresponding to the message to the remote bank teller; and responsive to the text and/or audio data being transmitted to a computing device of the remote bank teller and the remote bank teller providing a response message, receiving, at the ATM, response data, indicative of the response message.

## Description

### Field of the Invention

The present invention relates to a method and a computing system for enabling a hearing-impaired user of an ATM to communicate with a remote bank teller. In particular, but not exclusively, the present invention relates to a methodology by which a hearing-impaired user can communicate using signed language with a remote bank teller, by way of a translation module that can translate signed expressions to text and vice versa. This allows the remote bank teller to assist the user with transactions at an ATM without requiring the remote bank teller to be trained in signed language.

### Background

Automated Teller Machines (ATMs) are known. An automated teller machine (ATM) is an electronic banking outlet that allows customers/users to complete basic transactions without the aid of a bank representative or teller. Anyone with a credit card or debit card can access transaction services at most ATMs. ATMs provide both basic cash-dispensing services as well as advanced functions, including: check depositing, account information access, fund transfers, marketing of relevant products and the like. Historically, ATMs have not included any functionality to enable a user to communicate with a remote bank teller. However, newer types of ATM do have additional functionality that enables a user to communicate with a bank teller. These new types of ATMs are sometimes referred to as Interactive Teller Machines (ITMs). ITMs offer the basic components of an ATM, such as the receipt printer and card reader; however, ITMs usually include additional features such as: a video camera and handset (including microphone and speaker) for conducting conversations with a teller, a coin dispenser for distributing different denominations of coins, an ID scanner for authenticating the customer, a signature pad and the like.

Interactive Teller solutions today rely on two-way audio and video feeds between a user and a remote bank teller. Typically, the user approaches the ATM and can initiate the remote teller functionality. Once this is done, the camera and microphone attached to the ATM transmits audio and video captured of the user to a bank employee, the "remote teller", who will see this displayed on a computer screen. The remote teller's workstation also has a camera and microphone present, and audio and video of the remote teller is captured and transmitted back to the ATM where it is displayed to the user on the ATM display. This two-way communication allows for a user to access services that they would not be able to perform in a conventional ATM environment, including, for example, the ability to perform transactions in the absence of a card, exceed typical ATM withdrawal or deposit limits, or to receive support from a bank representative. In addition to having two-way communication with a remote teller, the remote teller can also remotely drive commands on the ATM from where they are, helping users to complete complex transactions.

However, the reliance of current Interactive Teller solutions on the two-way audio/visual feed described above means that the usage of ATMs by users who are hearing impaired or deaf may be challenging. Hearing loss impacts a significant amount of the population, with around 15.5% of adults in the United States impacted and around 70 million adults globally who are fully deaf. This number continues to increase at a rapid rate and will almost double by 2060. For example, challenges with current Interactive Teller solutions include that hearing-impaired users may not be able to hear audio of the remote teller (including spoken instructions and requests) transmitted to the ATM and therefore may not be able to carry out the remote teller's instructions, such as scanning an ID or entering a PIN. Hearing-impaired users may therefore be prevented from accessing a full range of transactions offered by the ATM which require interaction with a remote teller to complete.

### Summary

It is an aim of the present invention to at least partly mitigate one or more of the above-mentioned problems.

It is an aim of the present invention to help enable a hearing-impaired user of an ATM to communicate with a remote bank teller.

It is an aim of the present invention to help allow a hearing-impaired user of an ATM to access Interactive Teller solutions.

It is an aim of the present invention to help enable a hearing-impaired user of an ATM to communicate with a remote bank teller by using signed expressions of a signed language, without requiring training of the remote bank teller to understand or perform the signed language.

It is an aim of the present invention to help enable two-way communication between a hearing-impaired user of an ATM and a remote bank teller, where the hearing-impaired user communicates via signed expressions and the remote bank teller communicates via typed text or audible speech.

According to a first aspect of the present invention there is provided a computer-implemented method for enabling a hearing-impaired user of an ATM to communicate with a remote bank teller, comprising the steps of capturing, by at least one imaging device of an ATM, a video feed of a hearing-impaired user of the ATM performing at least one signed expression of a signed language, the at least one signed expression representing a message to a remote bank teller; transmitting, by the ATM, video data associated with the video feed to a translation module that is configured to identify the at least one signed expression represented in the video data and, based on the at least one signed expression, generate text and/or audio data for producing text and/or audio corresponding to the message to the remote bank teller; and responsive to the text and/or audio data being transmitted to a computing device of the remote bank teller and the remote bank teller providing a response message, receiving, at the ATM, response data, indicative of the response message.

Aptly, the method further comprising receiving the response data as response video data; and displaying, on a display of the ATM, a video message based on the response video data, the video message comprising an avatar performing at least one signed expression to communicate the response message to the hearing-impaired user via signed language.

Aptly, the method further comprising transmitting, by the computing device of the remote bank teller, response text data indicative of the response message to the translation module that is further configured to convert the response text data into the response video data; and receiving, at the ATM, the response video data.

Aptly, the method further comprising providing, by the computing device of the remote bank teller, the response text data responsive to receiving, by the computing device, at least one typed message received via a keyboard and/or touchscreen connected to the computing device.

Aptly, the method further comprising providing, by the computing device of the remote bank teller, the response text data responsive to receiving, by the computing device, response audio data via a microphone connected to the computing device; and converting, via a speech-to-text module, the response audio data into the response text data.

Aptly, the method further comprising receiving, at the ATM, the response data as response text data directly from the computing device of the remote bank teller; and displaying, on a display of the ATM, text based on the response text data.

Aptly, the method further comprising providing, by the computing device of the remote bank teller, the response text data responsive to receiving, by the computing device, at least one typed message received via a keyboard and/or touchscreen connected to the computing device.

Aptly, the method further comprising providing, by the computing device of the remote bank teller, the response text data responsive to receiving, by the computing device, response audio data via a microphone connected to the computing device; and converting, via a speech-to-text module, the response audio data into the response text data.

Aptly, the method further comprising receiving, at the ATM, the response data as response audio data directly from the computing device of the remote bank teller and captured by a microphone of the computing device; and outputting, by at least one speaker of the ATM, at least one audio signal based on the response audio data.

Aptly, the method further comprising receiving, at the computing device of the remote bank teller, the text data.

Aptly, the method further comprising displaying, on a display of the computing device of the remote bank teller, text produced based on the text data.

Aptly, the method further comprising converting, via a text-to-speech module, the text data into audio data for producing at least one audio signal representing an audible version of the text data; and outputting, via at least one speaker connected to the computing device of the remote bank teller, the at least one audio signal based on the audio data.

Aptly, the method further comprising detecting, at the ATM, an input event indicating that the hearing-impaired user of the ATM wants to communicate with the remote bank teller.

Aptly, the method further comprising responsive to said detecting, establishing, by the ATM, a communication link with the computing device of the remote bank teller.

Aptly, detecting the input event comprises detecting a first selection made via a keypad or touchscreen of the ATM by the hearing-impaired user that the user wants to speak with a remote bank teller.

Aptly, the method further comprising determining, by the ATM, that the hearing-impaired user wishes to communicate via signed language by detecting a second selection made via the keypad or touchscreen of the ATM by the hearing-impaired user indicating that the hearing-impaired user wishes to communicate using signed language.

Aptly, the method further comprising determining, by the ATM, that the hearing-impaired user wishes to communicate via signed language by transmitting card details of a card of the hearing-impaired user inserted into the ATM to a server where at least one preference for the user is stored, the at least one preference comprising data indicating that the user has a hearing impairment; and receiving, at the ATM, preference data for the at least one preference comprising the data indicating that the user has a hearing impairment.

Aptly, the method further comprising responsive to said detecting, executing, by the ATM, a terminal application that is configured to communicate with a teller application executing on the computing device of the remote bank teller; responsive to executing the terminal application, sending, by the ATM, a notification to the computing device indicating that the hearing-impaired user wishes to communicate with the remote bank teller; and responsive to receiving the notification, executing, by the computing device, the teller application.

According to a second aspect of the present invention there is provided a computing system, comprising an ATM and a computing device of a remote bank teller, wherein the ATM is configured to capture, by at least one imaging device of the ATM, a video feed of a hearing-impaired user of the ATM performing at least one signed expression of a signed language, the at least one signed expression representing a message to the remote bank teller; transmit video data associated with the video feed to a translation module that is configured to identify the at least one signed expression represented in the video data and, based on the at least one signed expression, generate text and/or audio data for producing text and/or audio corresponding to the message to the remote bank teller; and responsive to the text and/or audio data being transmitted to the computing device of the remote bank teller and the remote bank teller providing a response message, receive response data, indicative of the response message.

According to a third aspect of the present invention there is provided a computer program comprising instructions which, when executed by a computing device, cause the computing device to carry out the steps of the method defined by the first aspect of the present invention.

Certain embodiments of the present invention provide the translation or conversion of signed expressions performed by a hearing-impaired user to text, where the text is sent or transmitted to the remote bank teller.

Certain embodiments of the present invention provide the conversion of typed text or audible speech from the remote bank teller to a video of a computer-generated avatar performing signed expressions, where the video is provided to the user.

Certain embodiments of the present invention provide the automatic recognition of a hearing-impaired user upon insertion of a bank card linked to an account of a hearing-impaired user.

Certain embodiments of the present invention provide one-way or two-way 'sign-to speech' and/or 'speech-to-sign' communication by seamlessly integrating with existing Client Application Web Browser Interfaces.

Certain embodiments of the present invention enable users, both hearing impaired and not, to engage with a real-time rendered 3D AI Avatar for support in executing a self-service transaction, either by using sign language or speech. The transaction can be transferred to a remote teller who can speak to the user, with their speech being converted into sign language by the AI engine, rendering the response as sign language conveyed by the avatar. In response, the user can sign to the avatar, and the AI engine will convert this to plain text or spoken word for the remote teller. Its features include, for example: Sign Language Recognition, Speech to Sign Translation, Real-Time 3D Avatar Rendering. This solution provides inclusivity, enhancing Banking Access for deaf and/or hearing-impaired individuals, efficiency by streamlining communications and reducing misunderstandings, and expansion, by increasing transaction volumes using existing channels through inclusive practices.

Certain embodiments of the present invention utilise generative AI to deliver an AI-led, multi-layered solution for ATM/ITM inclusivity. The solution leverages a two-way sign-to-speech and speech-to-sign AI model to allow for communication between an individual signing and an individual speaking or typing.

Certain embodiments of the present invention seamlessly integrate with existing ATM and ITM remote teller interfaces (web browsers) and utilize sign language recognition and translation to capture & comprehend sign language into text; presents this to a remote teller, as required, as text or audio; and in both cases allows a response back to the consumer utilizing a rendered 3D avatar communicating in various international sign languages.

Certain embodiments of the present invention provide an AI generated, 3D rendered avatar that the user requests to help with a self-service transaction, by directing the user's session to be connected to a remote teller, utilising the existing ITM infrastructure. All the above is done with the user either speaking to, or signing to the AI avatar, and the AI avatar signing their responses back. The AI engine, including Natural Language Processing and Sign-Language Recognition, picks up on parts of the users' movement, identify the sign being made, and transcribe this to text (sign-to-speech). The AI avatar's responses are those of the remote teller, which have been converted from plain text or speech to sign language, the inverse of the process described above, this is then conveyed by the AI avatar to the user. The user continues to sign back to the AI avatar, and as above, this is recognised by the AI engine and converted to text for the remote teller to read. The remote teller, through the AI avatar, can therefore support the user by answering questions about how to fulfil a transaction, guiding them through the necessary steps to facilitate basic support and/or triage activities

Certain embodiments of the present invention handle speech-to-sign, and sign-to-speech where any camera can be used to pick up on the user's movements to understand the sign language being expressed.

Certain embodiments of the present invention provide a 3D Avatar which facilitates rendered sign language on screen.

Certain embodiments of the present invention allow for inclusivity in the ATM channel by allowing those who are hearing impaired, fully, or partially, the ability to utilize remote teller services at the device whilst allowing the financial institution to utilize their existing teller expert staff as they do today. Importantly this opens up the ability to drive incremental transactions through the ATM by enabling access to those transactions to a larger demographic base.

Certain embodiments of the present invention help allow a remote teller to be able to complete complex transactions with hearing-impaired users that need the user to interact with them to complete (e.g., withdrawal beyond ATM limits, transact without card). Conventionally, hearing impaired users may not be able to access these transactions due to the lack of communicability with the teller.

### Brief Description of the Drawings

Embodiments of the present invention will now be described hereinafter, by way of example only, with reference to the accompanying drawings in which:
Figure 1 illustrates a computing system;
Figure 2 illustrates communication between applications on an ATM and remote bank teller via a translation module; and
Figure 3 illustrates a flowchart describing the steps taken to enable a hearing-impaired user of an ATM to communicate with a remote bank teller.

In the drawings like reference numerals refer to like parts.

### Detailed Description

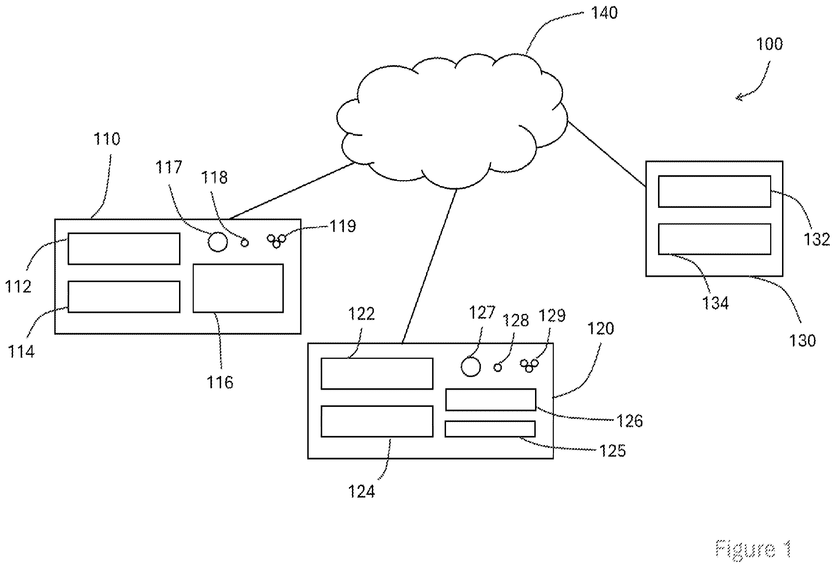

Figure 1 illustrates a computing system 100. In the computing system 100 there is an Automated Teller Machine (ATM) 110, a computing device 120 of a remote bank teller, and a translation module 130. The ATM may or may not be an Interactive Teller Machine (ITM). The ATM includes one or more processors 112, at least one memory 114 and a display 116. The memory is a non-transitory computer-readable storage medium. The memory 114 stores executable software that is executable by the processors 112 of the ATM. The display 116 displays a graphical user interface for enabling the user to enter details and select options during transactions at the ATM. The executable software of the ATM, when executed by the processor(s), causes the ATM to carry out the methodology described herein. The ATM also includes an imaging device 117, such as a camera, a microphone 118, and a speaker 119. The ATM may also include a communication interface (not shown) for communicating with the computing device 120. The ATM may also include an encrypted PIN pad (not shown), a note dispenser, a receipt printer, a card slot for insertion of a user's bank card (not shown), a contactless reader (not shown), a barcode reader (not shown) or the like as will be appreciated by a person of skill in the art. When the ATM is an ITM, the ATM may further include additional functionality. For example, the ITM may include a signature pad, an ID scanner, a telephonic handset, a wired headset, a tactile keyboard, a beamforming microphone or the like as will be appreciated by a person of skill in the art. This hardware may not be present on a conventional non-ITM ATM. The ITM may also have functionality to enable an audio and video communication link to be established with a remote teller device. This functionality may not be present on a conventional non-ITM ATM.

The computing device 120 is a computing device of the remote bank teller. For example, the computing device may be a laptop, a desktop computer, a mobile device, a tablet or the like. The computing device 120 also includes one or more processors 122, at least one memory 124, a keyboard 125 and a display 126. The memory 124 is also a non-transitory computer readable storage medium. The memory 124 stores executable software that is executable by the processors of the computing device. The keyboard 125 allows for the remote bank teller to type text. Alternatively or additionally to the keyboard, there may be a touchscreen or the like. The display 126 also displays a graphical user interface where the remote bank teller may be shown in real-time a virtual desktop corresponding to the screen being shown on the ATM. The computing device 120 also includes an imaging device 127, such as a camera, a microphone 128, and a speaker 129. The computing device 120 may also include a communication interface (not shown) for communicating with the ATM 110.

The translation module 130 may, for example, be hosted on a remote server, or alternatively may be included as a module within the ATM 110 or computing device 120. The translation module 130 also includes one or more processors 132 and at least one memory 134. The memory 134 is also a non-transitory computer readable storage medium. The memory 134 stores executable software that is executable by the processors of the computing device. The memory 134 may store a trained machine learning model that is trained to convert signed expressions to text and/or to convert text to a 3D rendered avatar performing the signed expressions.

The ATM 110, computing device 120 and translation module 130 communicate via a network 140. The network 140 may be wired, wireless or a combination of wired and wireless. For example, the network is the internet.

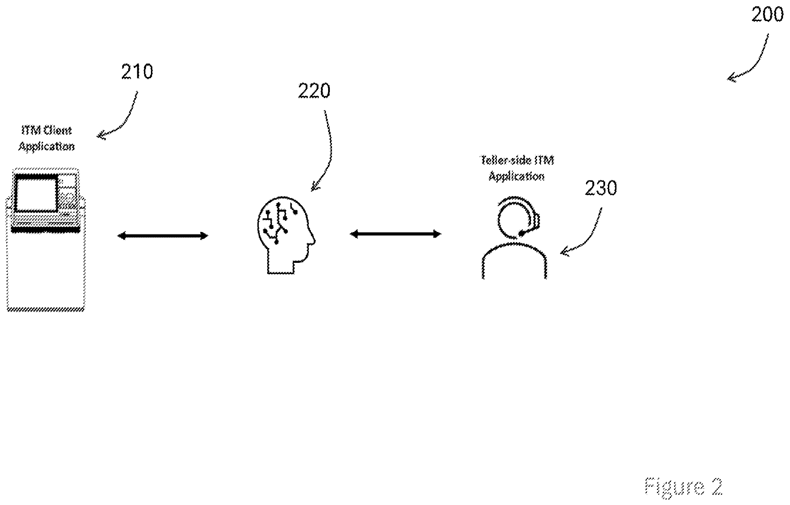

Figure 2 illustrates a system 200 showing the applications that execute on an ATM (ITM client application 210), translation module (translation application 220) and computing device of a remote bank teller (teller-side ITM application 230) to perform the methodology described herein. The ATM, translation module, and computing device may be those as described with reference to Figure 1. In Figure 2, the ATM is an ITM. However, it will be appreciated that in certain other embodiments the ATM may not be an ITM.

On the ATM, there is executed a terminal application 210. That is, the terminal application is stored in the memory of the ATM and is executed on processor(s) of the ATM. The terminal application may be referred to as an ITM Client Application. The terminal application is deployed on the terminal and used to instruct the terminal on transactions. This type of application typically utilizes cameras and a microphone on the terminal to capture the user and transmit it to the Teller-side ITM Application, and receives video and audio data back from the Teller-side ITM Application to allow for two-way communication between a user and remote teller. However, according to the new methodology described herein, two-way communication can occur for a hearing-impaired user via cameras on the terminal capturing video of the user performing signed expressions of a signed language. The signed language may be, for example, American Sign Language, British Sign Language, International Sign, or the like. Signed expressions use manual articulation or the like to convey the meaning and represent a message (instead of spoken words). Text corresponding to the message represented by the signed expressions is sent to the Teller-side ITM Application after being generated by the translation application, as described herein, and a response message from the remote teller is sent back to the ITM Client Application to allow for the two-way communication. It will be appreciated that the response message from the remote teller may be provided directly as text displayed on a screen of the terminal or may be a video message of an avatar performing signed expressions corresponding to the response message, where the video message is produced by the translation application as described herein. The transaction flow between the ITM Client Application and the Teller-side ITM Application remains otherwise unchanged with all existing transactions and modules maintained. This thus still enables the teller to assist the user in the completion of any given transaction(s). The authentication of the user to allow for any transactions also remains unchanged and is not impacted by this change on the method of communication, using existing PCI compliant methods for standard transactions (eg. Chip & pin, contactless NFC) and for extended transactions, still utilizing other devices (eg. ID scanners and/or passport recognition). The only change in approach described herein is in the method for enabling a hearing-impaired user of the ATM to communicate with the remote bank teller. That is to say, the ITM Client Application behaves similarly to how current applications work except for transmitting video data from the ITM client application to the teller-side ITM application via the translation module.

Put another way, the ATM is a physical computing device with amongst other devices, a camera, microphone and screen on the device. When the ATM is not an ITM, the ATM runs an ATM client application which allows a user to conduct self-service transactions including cash dispense, cash deposit or other account services functions. According to certain embodiments, this application is a browser-based solution which displays web pages. The user conducts these transactions using the devices on the ATM and is entirely self-guided. The client application is integrated into the broader payments eco-system through the application following standards, such as CEN XFS & NDC Message or ISO 20022, to enable it to communicate with the bank's switch to approve or reject a transaction through its integration with card networks and/or the bank's own host. These kinds of transactions typically rely on a card being present, or according to certain embodiments, may allow for alternative NFC authentication methods using a consumer's smartphone or other electronic device. They may be limited by defined thresholds on what a user can withdraw or deposit in one transaction. Some forms of user guidance may exist on the ATM but typically it is limited in scope. For example, for the visually impaired, these applications typically will operate with the ability to insert a pair of headphones into an audio jack on the fascia of the device which will then trigger a voice guidance mode which allows the user to make selections on the application to drive commands using the encrypted PIN pad (for example, "press 5 for X, press 3 for Y") and using clock-face guidance to then instruct the user where the media or card entry/exit points are. Interactive teller capability may be added on top of the above-described functionality. On the client side, typically there is a function on the screen to allow the user to "Speak to a Remote Teller". When the option is selected, the interactive teller application is initiated. This may run separately, or as part of, the ATM client application. On the teller workstation, there is an application running which is integrated with the bank's standard teller application that would be used for an over-the-counter transaction.

On the translation module, there is executed a translation application 220. That is, the translation application is stored in the memory of the translation module and is executed on processor(s) of that device. The translation application may be a two-way pre-trained AI or machine learning model that can convert or translate between signed expressions of a signed language and text (in both directions) and that can also identify signed expressions that are represented in video data. In a first direction, the input to the translation application may be a video feed containing a user performing signed expressions, with the output as text corresponding to the message represented by the signed expressions. In a second direction, the input to the translation application may be text, with the output a video message containing a rendered avatar performing signed expressions corresponding to the message represented by the text. It will be appreciated that suitable pre-trained translation applications are known to the person skilled in the art and are available to use as a third-party service, for example by sending requests or commands to an application programming interface (API) and receiving outputs. That is to say, the translation application may be a third-party sign-to-speech/speech-to-sign service. Suitable AI models available for use include services such as SLAIT, Signapse AI, IRIS, OmniBridge, Kara Technologies, Sign Speak and the like. For example, a methodology for detecting and converting signed language to text is described in U.S. Patent Publ. No. 2022/0327961 A1, which is hereby incorporated by reference in its entirety, and a methodology for generating an avatar performing signed language based on input text is described in U.S. Patent Publ. No. 2023/0343011 A1, which is also hereby incorporated by reference in its entirety. The translation application may be hosted on a remote server operated by a third party or may be locally hosted by the ATM operator. The link to the translation application may therefore be via local API calls, where the AI model is hosted as a local server instance or as a 'thick client' where the software is resident on the terminal. Alternatively, it could integrate an agent to reside on the ATM, and make API calls over the internet to a cloud-based instance of the AI Model. In both cases, the ATM links into the AI Model, presenting it the data from the user (movements) and then presents the outputs (3D Avatar signing the response).

As described above, signed expressions are performed by a user at the terminal and captured as a video feed, with the terminal application providing the video feed to the translation application. The translation application translates or converts the message represented by the signed expressions to text and provides the text to the teller-side ITM application or back to the terminal application so it can be sent to the teller-side ITM application. The translation application may also allow for a response message provided as text by the teller-side ITM application to be converted to a video message containing a rendered avatar performing signed expressions that is provided to the ITM Client Application or back to the teller-side application so it can be sent to the terminal application. It will be appreciated that the response message may be provided directly to the ITM Client Application as text, rather than converting it to a video message of a rendered avatar via the translation application. According to other embodiments, the translation application may directly convert the message represented by the signed expressions to audio data for producing an audio signal corresponding to an audible version of the message, or may produce text as described above and then produce audio data via a text-to-speech module (as is known in the art). According to other embodiments, the response message may be provided as audio data that is converted to text via a speech-to-text module (as is known in the art) before producing the video message containing a rendered avatar performing signed expressions from the text, or audio data may be directly converted to a video message containing a rendered avatar performing signed expressions.

On the computing device of the remote bank teller, there is executed a teller application 230. That is, the teller application is stored in the memory of the computing device and is executed on processor(s) of that device. The teller application is an application that executes on the computing device of the teller. The teller application enables the teller to assist the user with transactions at an ATM (e.g., by controlling the ATM). The teller application may be referred to as a Teller-side ITM Application. As described herein, this application is utilized on a device (e.g., PC, laptop) within the bank's call centre or branch. This application is how the member of bank staff interacts with the ATM and can perform transactions on the user's behalf. As will be appreciated by a person of skill in the art, these types of application are currently utilized by a member of bank staff (remote teller) to transmit video & audio content of the bank member of staff, collected through a video camera and microphone, to the terminal application executing on the ATM (referred to as the ITM Client Application) and for receiving video/audio content from the ITM Client Application. However, according to the new methodology described herein, the remote teller can communicate with a hearing-impaired user by providing a response message in response to receiving a message from the ITM Client Application. As described herein, the message from the ITM Client Application is initially provided by a user performing signed expressions, which via the translation application is provided as text and/or audio data to the Teller-side ITM Application. It will be appreciated that the Teller-side ITM Application may receive text corresponding to the user message from the translation application (or from the terminal application if the translation application provides the response to the ATM), which may be displayed directly on a screen of the computing device and/or may be converted to audible data by a text-to-speech algorithm in the Teller-side ITM Application, and/or the Teller-side ITM Application may directly receive audible data from the translation application (or from the terminal application if the translation application provides the response to the ATM). The remote teller may provide the response message by typing a message as text (via a keyboard, touchscreen of the like) or by speaking the message into a microphone. Audible data corresponding to the spoken message may be sent directly to the translation application or may be first converted to text by a speech-to-text algorithm at the Teller-side ITM Application. The Teller-side ITM Application still behaves as it does currently for other functions such as driving transactions, authenticating users etc but audio-video content is received/transmitted via the translation module. All other integration with the ITM Client Application remains as-is.

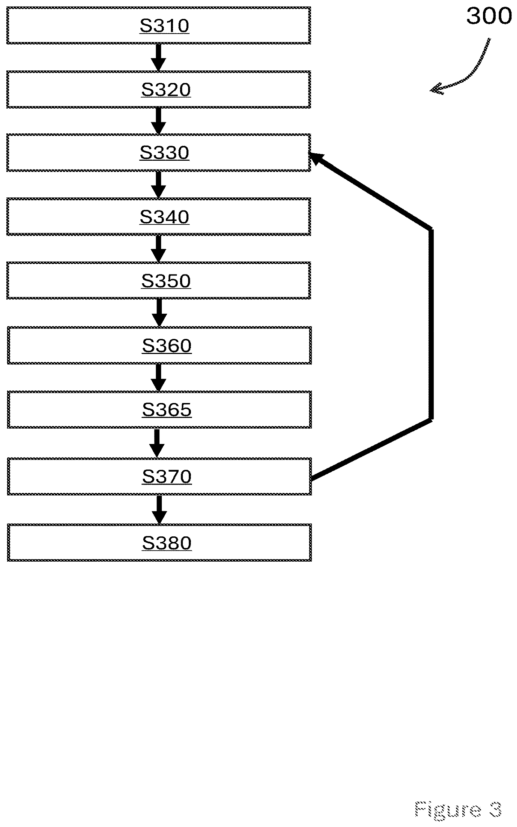

Figure 3 illustrates a method 300 describing how a hearing-impaired user of an ATM may communicate with a remote bank teller using signed language. It will be appreciated that the method 300 does not require the remote bank teller to be trained in signed language. The ATM, translation module, and computing device may be those as described with reference to Figure 1, with corresponding applications executing on each as described with reference to Figure 2.

First, at an initiation step S310, a hearing-impaired user approaches an ATM to begin a transaction. The ATM may be a through-the-wall ATM, in a bank branch, in a drive-up location, external free-standing placement or the like. The ATM may be an ITM. The user then initiates a transaction at the ATM. This may involve the ATM presenting an interface asking the user to authenticate. For example, the ATM may request that the user inserts a bank card into a card slot of the ATM or scan their card on a contactless reader of the ATM and then enter their PIN. The user is then authenticated. If the user is correctly authenticated, the transaction proceeds. If not, the user may have to repeat the authentication process. Alternatively or additionally, the user may not be authenticated until a communication link is established between the devices of the bank teller and the user. In this case, the bank teller may authenticate the user by visually comparing the user's appearance to that of an appearance on the user's ID card/Passport or the like.

As part of the initiation step S310, the user then indicates that they would like to communicate with a bank teller. The user may do this by making a first selection via the display (for example a touchscreen linked to the display) or a keypad of the ATM that they would like to communicate with a bank teller, for example by pressing a "Speak with a Teller" button. This first selection is detected as an input event by the ATM that the user would like to communicate with a bank teller. In addition, the hearing-impaired user indicates that they wish to communicate with the bank teller using signed language by making a second selection via the display (for example a touchscreen linked to the display) or keypad of the ATM that they would like to communicate using signed language. This second selection is detected as an input event by the ATM that the user would like to communicate with a bank teller using signed language. According to other embodiments, the ATM may determine automatically (i.e. without requiring the user to make a second selection) that the hearing-impaired user wishes to communicate via signed language. For example, card details of a card of the hearing-impaired user inserted into the ATM may be transmitted to a server where details/preferences associated with a user's account number (e.g., their Primary Account Number (PAN)) may be stored. These details/preferences may have been previously specified by the user (e.g., in-branch, via a banking app or the like). These details/preferences may include data indicating that the user has a hearing impairment. In response to these preferences/details being identified, the data indicative of these details/preferences (including the data indicating that the user has a hearing impairment) may then be transmitted to and received at the ATM. The ATM then interprets this data as the user wishing to communicate via signed language.

Next, in a connection step S320 following the ATM detecting that the user wants to communicate with a bank teller using signed language, a terminal application (Client ITM Application) that is configured to communicate with the teller application on the computing device of the remote teller is executed. Initiation of the terminal application causes the teller application to also be activated/executed. This may be achieved by the ATM sending a notification to the computing device of a selected teller and the computing device executing the teller application in response to receipt of this notification. Initiation of the terminal application also causes the translation application to be activated/executed. It will be appreciated that the translation application may be always/constantly running on a remote (or local) server and activation of the translation application may include opening a communication link (for example, via API calls) to the translation application. As a result, a communication link is then established between the computing device (particularly the teller application) and the ATM (particularly the terminal application), optionally via the translation application of the translation module. This communication link is a bi-directional audio, video and textual communication link that allows an audio-video feed, along with text data, to be transmitted between the terminal application and the teller application, optionally via the translation application, which allows for communication between the hearing-impaired user and the teller staff. As described with reference to Figure 1, the communication link may be via a network, such as the internet, and the network may be wired, wireless or a combination of wired and wireless.

Then, in an image capture step S330, at least one imaging device (such as at least one camera) of the ATM captures a video feed of the hearing-impaired user performing signed expressions of a signed language representing their message to the remote bank teller. It will be appreciated that the message may be represented by at least one signed expression. The signed language may be, for example, American Sign Language, British Sign Language, International Sign, or the like. Signed expressions using manual articulation or the like convey the meaning and represent a message (instead of spoken words). It will be appreciated that a microphone of the ATM may simultaneously capture audio data, and that the hearing-impaired user may communicate by speaking alongside communicating using signed language.

Next, in a translation step S340, the video data associated with the video feed is transmitted to the translation module and input to the translation application. As described herein, the translation application is a pre-trained AI model that can identify signed expressions represented in video data and can convert/translate the signed expressions to text and/or audio data (and vice versa). Based on the signed expressions within the video data (representing the message from the user to the remote bank teller), the translation application generates text data for producing text corresponding to the message to the remote bank teller. According to other embodiments, the translation application may directly generate audio data for producing audio signals corresponding to the message based on the signed expressions, or alternatively the translation application may generate text data that may be converted to audio data by a text-to-speech algorithm.

Then, in a receiving step S350, the text data (and/or audio data) generated by the translation application in the translation step S340 is transmitted to the teller application of the computing device of the remote bank teller. This may be achieved by the translation application sending the text data (or audio data) directly to the teller application or may be achieved by the translation application returning the text data (or audio data) to the terminal application, which then sends this data on to the teller application. In any case, the text data (and/or audio data) is therefore received by the teller application at the computing device of the remote bank teller. The message from the user to the remote bank teller (from the image capture step S330) can then be given to the remote bank teller by displaying text produced based on the text data on a display of the computing device. The remote bank teller can understand the message by reading the text on the display. It will be appreciated that the video feed captured of the user in the image capture step S330 may also be transmitted to the computing device and displayed on the display alongside the text representing the message. Alternatively or in addition, at least one audio signal representing an audible version of the message based on audio data may be output by at least one speaker connected to the computing device. The audio data may be generated in the translation step S340 and transmitted to the computing device, or may be generated at the computing device by converting the text data from the translation step S340 into audio data via a text-to-speech module or algorithm at the computing device.

Next, in a response step S360, the remote bank teller provides a response message to the user, responding to the message from the user being transmitted to and received by the remote bank teller (in the receiving step S350). The response message may include, for example, instructions to the user or a request for further information from the user. For example, the remote bank teller may provide the response message as a (or at least one) typed message, received by the computing device of the remote bank teller via a keyboard and/or touchscreen connected to the computing device. That is to say, the remote bank teller may type the response message, and the computing device may provide the typed message as response text data representing the typed message. Additionally or alternatively, rather than typing the response message, the remote bank teller may provide the response message as an audio message by speaking into a microphone connected to the computing device and the computing device may therefore receive response audio data indicative of the audio message via the microphone. It will be appreciated that after the computing device receives response audio data, the computing device may use a speech-to-text algorithm or module to convert the response audio data into response text data and the computing device may therefore provide the response message as response text data (without the remote bank teller directly typing a message). The remote bank teller may also be captured by an imaging device (such as a camera) in a video feed while providing the remote message.

Then, in an optional response translation step S365, response text data indicative of the response message is transmitted from the computing device to the translation module. As described in the response step S360, response text data received by the translation module may be directly provided as a typed message by the remote bank teller at the computing device or may be converted from response audio data at the computing device. Alternatively, response audio data indicative of the response message may be transmitted from the computing device to the translation module, and optionally response text data may be converted from response audio data by a speech-to-text module at the translation module (rather than at the computing device). As described herein, the translation module is configured to convert the response text data or response audio data into response video data, where the response video data encodes a video message including a 3d rendered avatar performing signed expressions corresponding to the response message. That is to say, the response translation step S365 converts the response message from the remote bank teller into signed expressions for communicating the response message to the hearing-impaired user via signed language. It will be appreciated that the translation application of the translation module may take as input response text data or response audio data and output response video data encoding a video message including a 3d rendered avatar performing signed expressions corresponding to the response message.

Next, in a response display step S370, response data indicative of the response message from the remote bank teller is received at the ATM and a representation of the response message is displayed to the user in a manner suitable for understanding by the hearing-impaired user. For example, the response data may be response video data generated via the response translation step S365 and a video message based on the response video data may be displayed on a display of the ATM, where the video message includes an avatar performing signed expressions corresponding to the response message and the response message is therefore communicated to the user via signed language. This may be achieved by the translation application sending the response video data directly to the terminal application or may be achieved by the translation application returning the response data to the teller application, which then sends this data on to the terminal application. Alternatively or in addition, the response data may be received at the ATM directly from the computing device as response text data and text based on the response text data may be displayed on the display of the ATM. It will be appreciated that the hearing-impaired user can read the text representing the response message. As described in the response step S360, response text data received by the ATM may be directly provided as a typed message by the remote bank teller at the computing device or may be converted from response audio data at the computing device. Further alternatively or in addition, the response data may be received at the ATM directly from the computing device as response audio data captured by a microphone of the computing device and an audio signal based on the response audio data may be output from at least one speaker of the ATM. It will be appreciated that the hearing-impaired user may be able to at least partially hear the audio signal if they are not fully deaf. In some embodiments, a video feed of the bank teller may also be provided to the user alongside the video message of an avatar performing signed expressions. For example, a video feed including video data captured by a camera of the bank teller's device may be transmitted to and displayed on the display of the ATM. The response message from the remote bank teller may include instructions for the user to complete certain actions, such as initiating certain functions on the ATM, or the remote bank teller may remotely execute certain functions or actions on the ATM, or the response message may ask for the user to provide a further message providing further information. The response display step S370 therefore assists the user with completing their desired transaction and allows the remote bank teller to provide assistance to the hearing-impaired user. All other transactions, user flows and forms of authentication currently provided between teller applications and terminal applications remains unchanged.

Following the response display step S370, the communication between hearing-impaired user and remote bank teller may continue by the method 300 returning to the image capture step S330, which allows for the exchange of further messages from the user and further response messages from the remote bank teller. Alternatively, if following the response display step S370 the transaction has been satisfactorily completed then the method 300 proceeds to a completion step S380 where the communication with the remote bank teller is terminated. This may be by the teller application or by the terminal application being closed. When this occurs the audio-video feed between the terminal application and the teller application (via the translation module) is disconnected. The terminal application is closed and the terminal returns to the standard non-interactive terminal application.

This methodology described above may be summarised as follows. The user approaches the ATM and initiates a transaction. The user selects a control on the display which is in the effect of "Speak with a Teller", this initiates the Client ITM Application and associated functionality. The user also selects a control to indicate that they wish to communicate to the teller using signed language, or their pre-defined stored details/preferences that are retrieved by the ATM include data indicating that the user is hearing impaired. Then, the Teller-Side Application will execute on the Bank Staff member's device and connect to the Client ITM Application. The user communicates their message using signed expressions, which is captured as a video feed by a camera of the ATM. The video feed of the user performing signed expressions is exposed or sent to the translation application, which recognises the signed expressions in the video feed and synthesises them into plain text. The translation application may be a third-party pre-trained AI model. Text data for the plain text may then be received at the teller application (either directly from the translation module or indirectly via the terminal application). The teller application may read this text aloud or may present it as text to the remote teller. This enables the teller to understand what the user has communicated using signed expressions. The teller may then provide a response, either as text or through voice, which the teller application captures. The teller application provides this to the translation application, which synthesises the text into the relevant signed expressions corresponding to the teller's message and generates a video feed of an avatar performing the signed expressions. The Client ITM Application then utilizes that video feed on screen and presents it to the user. The Client ITM Application may also display the teller's message as text. This will repeat for as long as the conversation is required to continue and all other aspects, including how the user or the teller can interact with the ATM and drive transactions, remains the same as it does in a typical ITM embodiment.

It will be appreciated that embodiments of the present invention provide advantages relative to allowing hearing-impaired users to communicate with a remote bank teller by exchanging typed text-based messages. Communication via typing and exchanging text-based messages may be slower than communicating via voice and/or signed expressions, require additional equipment (such as a keyboard) on/at the ATM, and/or may be undesirable for certain users who cannot easily type messages, such as the elderly.

It will be appreciated that embodiments of the present invention provide advantages relative to training remote bank tellers to understand and/or be able to perform signed language. Problems associated with training remote bank tellers in signed language include, for example, that training remote bank tellers may be prohibitively expensive and/or may result in non-fluent remote bank tellers incorrectly signing and hence reducing the integrity/accuracy of the communication.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Although the present disclosure has been particularly shown and described with reference to the preferred embodiments and various aspects thereof, it will be appreciated by those of ordinary skill in the art that various changes and modifications may be made without departing from the spirit and scope of the disclosure. It is intended that the appended claims be interpreted as including the embodiments described herein, the alternatives mentioned above, and all equivalents thereto.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A computer-implemented method for enabling a hearing-impaired user of an Automated Teller Machine (ATM) to communicate with a remote bank teller, comprising the steps of:
capturing, by at least one imaging device of an ATM, a video feed of a hearing-impaired user of the ATM performing at least one signed expression of a signed language, the at least one signed expression representing a message to a remote bank teller;
transmitting, by the ATM, video data associated with the video feed to a translation module that is configured to identify the at least one signed expression represented in the video data and, based on the at least one signed expression, generate text and/or audio data for producing text and/or audio corresponding to the message to the remote bank teller; and
responsive to the text and/or audio data being transmitted to a computing device of the remote bank teller and the remote bank teller providing a response message, receiving, at the ATM, response data, indicative of the response message.

2. The method as claimed in claim 1, further comprising:
receiving the response data as response video data; and
displaying, on a display of the ATM, a video message based on the response video data, the video message comprising an avatar performing at least one signed expression to communicate the response message to the hearing-impaired user via signed language.

3. The method as claimed in claim 2, further comprising:
transmitting, by the computing device of the remote bank teller, response text data indicative of the response message to the translation module that is further configured to convert the response text data into the response video data; and
receiving, at the ATM, the response video data.

4. The method as claimed in claim 3, further comprising providing, by the computing device of the remote bank teller, the response text data responsive to receiving, by the computing device, at least one typed message received via a keyboard and/or touchscreen connected to the computing device; or
providing, by the computing device of the remote bank teller, the response text data responsive to receiving, by the computing device, response audio data via a microphone connected to the computing device; and
converting, via a speech-to-text module, the response audio data into the response text data.

5. The method as claimed in any preceding claim, further comprising:
receiving, at the ATM, the response data as response text data directly from the computing device of the remote bank teller; and
displaying, on a display of the ATM, text based on the response text data.

6. The method as claimed in claim 5, further comprising providing, by the computing device of the remote bank teller, the response text data responsive to receiving, by the computing device, at least one typed message received via a keyboard and/or touchscreen connected to the computing device; or
providing, by the computing device of the remote bank teller, the response text data responsive to receiving, by the computing device, response audio data via a microphone connected to the computing device; and
converting, via a speech-to-text module, the response audio data into the response text data.

7. The method as claimed in any preceding claim, further comprising:
receiving, at the ATM, the response data as response audio data directly from the computing device of the remote bank teller and captured by a microphone of the computing device; and
outputting, by at least one speaker of the ATM, at least one audio signal based on the response audio data.

8. The method as claimed in any preceding claim, further comprising receiving, at the computing device of the remote bank teller, the text data; and optionally
further comprising displaying, on a display of the computing device of the remote bank teller, text produced based on the text data.

9. The method as claimed in claim 8, further comprising:
converting, via a text-to-speech module, the text data into audio data for producing at least one audio signal representing an audible version of the text data; and
outputting, via at least one speaker connected to the computing device of the remote bank teller, the at least one audio signal based on the audio data.

10. The method as claimed in any preceding claim, further comprising detecting, at the ATM, an input event indicating that the hearing-impaired user of the ATM wants to communicate with the remote bank teller; and optionally further comprising responsive to said detecting, establishing, by the ATM, a communication link with the computing device of the remote bank teller.

11. The method as claimed in claim 10, wherein detecting the input event comprises detecting a first selection made via a keypad or touchscreen of the ATM by the hearing-impaired user that the user wants to speak with a remote bank teller; and optionally
further comprising determining, by the ATM, that the hearing-impaired user wishes to communicate via signed language by detecting a second selection made via the keypad or touchscreen of the ATM by the hearing-impaired user indicating that the hearing-impaired user wishes to communicate using signed language.

12. The method as claimed in claim 11, further comprising:
determining, by the ATM, that the hearing-impaired user wishes to communicate via signed language by transmitting card details of a card of the hearing-impaired user inserted into the ATM to a server where at least one preference for the user is stored, the at least one preference comprising data indicating that the user has a hearing impairment; and
receiving, at the ATM, preference data for the at least one preference comprising the data indicating that the user has a hearing impairment.

13. The method as claimed in any one of claims 10 to 12, further comprising:
responsive to said detecting, executing, by the ATM, a terminal application that is configured to communicate with a teller application executing on the computing device of the remote bank teller;
responsive to executing the terminal application, sending, by the ATM, a notification to the computing device indicating that the hearing-impaired user wishes to communicate with the remote bank teller; and
responsive to receiving the notification, executing, by the computing device, the teller application.

14. A computing system, comprising:
an Automated Teller Machine (ATM) and a computing device of a remote bank teller, wherein the ATM is configured to:
capture, by at least one imaging device of the ATM, a video feed of a hearing-impaired user of the ATM performing at least one signed expression of a signed language, the at least one signed expression representing a message to the remote bank teller;
transmit video data associated with the video feed to a translation module that is configured to identify the at least one signed expression represented in the video data and, based on the at least one signed expression, generate text and/or audio data for producing text and/or audio corresponding to the message to the remote bank teller; and
responsive to the text and/or audio data being transmitted to the computing device of the remote bank teller and the remote bank teller providing a response message, receive response data, indicative of the response message.

15. A computer program comprising instructions which, when executed by a computing device, cause the computing device to carry out the method of any of claims 1 to 13.
